# FASCICULE DE BREVET EUROPEEN

(11) **EP 1 384 111 B1**
(45) Date de publication et mention de la délivrance du brevet: **07.04.2010**
(21) Numéro de dépôt: 02730382.5
(22) Date de dépôt: 02.05.2002
(51) Int. Cl.: G02F 1/139, G09G 3/36

(54) **DISPOSITIF D'AFFICHAGE BISTABLE A NIVEAU DE GRIS A BASE DE CRISTAUX LIQUIDES NEMATIQUES**
BISTABILE NEMATISCHE FLÜSSIGKRISTALLVORRICHTUNG MIT GRAUSTUFEN
NEMATIC LIQUID CRYSTAL BISTABLE DISPLAY DEVICE WITH GREY LEVEL

(30) Priorité: 04.05.2001 FR 0106045
(43) Date de publication de la demande: 28.01.2004
(73) Titulaire: Nemoptic, 78114 Magny-Les-Hameaux (FR)
(72) Inventeur: ANGELE, Jacques, F-92240 Malakoff (FR); MARTINOT-LAGARDE, Philippe, F-91460 Marcoussis (FR); DOZOV, Ivan, F-91190 Gif sur Yvette (FR); STOENESCU, Daniel, F-91400 Orsay (FR); VERCELLETTO, Romain, F-78300 Poissy (FR)
(74) Mandataire: Texier, Christian
(86) Numéro de dépôt international: PCT/FR2002/001514
(87) Numéro de publication internationale: WO 2002/091073

(56) Documents cités:
- EP-A- 0 773 468
- EP-A- 1 094 103
- EP-A- 1 139 151
- US-A- 4 601 542
- MCINTOSH J G ET AL: "Flow induced surface switching in a bistable nematic device" JOURNAL OF ENGINEERING MATHEMATICS, FEB. 2000, KLUWER ACADEMIC PUBLISHERS, NETHERLANDS, vol. 37, no. 1-3, pages 129-142, XP001010744 ISSN: 0022-0833
- YOO J-G ET AL: "SURFACE PRETILT EFFECTS OF BISTABLE TWISTED NEMATIC LIQUID CRYSTAL DISPLAY" JAPANESE JOURNAL OF APPLIED PHYSICS, PUBLICATION OFFICE JAPANESE JOURNAL OF APPLIED PHYSICS. TOKYO, JP, vol. 38, no. 10, PART 1, octobre 1999 (1999-10), pages 6005-6007, XP000935670 ISSN: 0021-4922
- NOBILI M ET AL: "SURFACE WALLS ON A BISTABLE ANCHORING OF NEMATIC LIQUID CRYSTALS" JOURNAL DE PHYSIQUE. COLLOQUE, PARIS, FR, vol. 5, no. 4, 1 avril 1995 (1995-04-01), pages 531-560, XP000561113 ISSN: 0449-1947 cité dans la demande
- BOCK H: "RANDOM FORMATION IN 0 - 360 BITABLE NEMATIC TWIST CELLS" APPLIED PHYSICS LETTERS, AMERICAN INSTITUTE OF PHYSICS. NEW YORK, US, vol. 73, no. 20, 16 novembre 1998 (1998-11-16), pages 2905-2907, XP000788594 ISSN: 0003-6951

## Description

La présente invention concerne le domaine des dispositifs d'affichage à base de cristaux liquides.

Les cristaux liquides sont largement utilisés dans un grand nombre de dispositifs d'affichage, tels que des afficheurs alphanumériques, des écrans plats, des valves optiques, etc..

Généralement un dispositif d'affichage à base de cristaux liquides comprend deux plaques ou substrats parallèles assurant le confinement du cristal liquide. Ces plaques ou substrats sont munis d'une part de moyens permettant de contrôler l'orientation et l'ancrage du cristal liquide et d'autre part d'électrodes permettant d'appliquer un champ électrique sur le cristal liquide pour modifier la configuration de celui-ci.

Dans les dispositifs à base de cristaux liquides nématiques, qui font l'objet de la présente invention, on utilise un cristal liquide nématique, achiral ou chiralisé par exemple en ajoutant un dopant chiral, avec un pas d'hélice supérieur à quelques micromètres. L'orientation et l'ancrage du cristal liquide à proximité des surfaces sont définis par des couches ou des traitements d'alignement appliquées sur les substrats, qui imposent, en l'absence de champ électrique, une texture uniforme ou faiblement tordue.

La plupart des dispositifs proposés et réalisés à ce jour sont monostables. En l'absence de champ électrique une seule texture est réalisée dans le dispositif. Cette texture correspond à un minimum absolu de l'énergie totale de la cellule. Sous champ électrique cette texture est déformée continûment et ses propriétés optiques varient en fonction de la tension appliquée. A la coupure du champ, le nématique revient à nouveau dans la seule texture monostable.

Une autre classe d'afficheurs nématiques est celle des nématiques bistables. Dans ce cas, au moins deux textures distinctes peuvent être réalisées dans la cellule. Ces textures correspondent aux même ancrages sur les surfaces et sont stables ou métastables en l'absence de champ électrique. La commutation entre les deux états est réalisée par l'application de signaux électriques appropriés. Mais une fois l'image inscrite, celle-ci reste mémorisée en absence de champ grâce à la bistabilité (ou métastabilité). Cette mémoire des afficheurs bistables est très attractive pour de nombreuses applications. Elle permet un faible taux de rafraîchissement des images. Elle permet ainsi, par exemple, de diminuer la consommation des appareils portables.

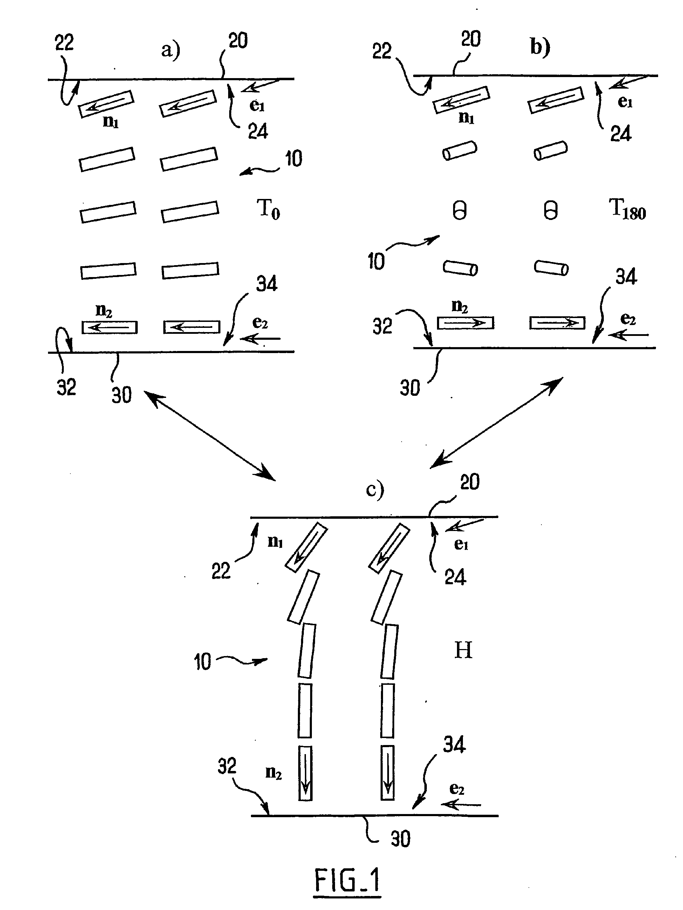

Un exemple typique d'afficheur bistable est présenté schématiquement sur la figure 1. On trouvera un descriptif de ce dispositif dans les documents [1] et [2]. Les deux textures bistables, T₀ et T₁₈₀, représentées respectivement sur les figures la et 1b, diffèrent entre elles par une torsion de ±180° et sont topologiquement incompatibles. Le pas spontané du nématique est choisi sensiblement égal au quart de l'épaisseur de la cellule, pour rendre les énergies de T₀ et T₁₈₀ essentiellement égales. Sans champ il n'existe aucun autre état avec une énergie plus basse : T₀ et T₁₈₀ présentent une vraie bistabilité. Sous fort champ électrique une texture presque homéotrope H (figure 1c) est obtenue, avec au moins un des ancrages sur les substrats « cassé »: les molécules sont normales à la plaque ou substrat au voisinage de sa surface. A la coupure du champ électrique, la cellule est guidée vers l'un ou l'autre des états bistables, en favorisant un couplage élastique (T₀) ou hydrodynamique (T₁₈₀) entre les deux ancrages de surface. Optiquement, les deux états T₀ et T₁₈₀ sont très différents et permettent d'afficher des images en noir et blanc avec un contraste supérieur à 100.

Une autre classe de dispositifs cristaux liquides à mémoire sont les afficheurs de type ordre - désordre. Ces dispositifs présentent une texture uniforme ou régulière, et un grand nombre de textures désordonnées, avec une forte densité de défauts. De tels dispositifs sont évoqués dans les documents [3] et [4]. Dans ces dispositifs la lumière est fortement diffusée et dépolarisée sur les défauts. Les propriétés optiques des textures désordonnées changent proportionnellement à la densité des défauts ce qui permet l'affichage de niveaux de gris, indispensable pour obtenir des images de bonne qualité en noir, gris et blanc ou en couleur.

Cependant les dispositifs proprement dits bistables, avec seulement deux états d'égale énergie, de textures régulières, sont intrinsèquement mal adaptés pour un affichage à teintes de gris. En effet dans ces dispositifs, seulement deux textures bistables distinctes peuvent être affichées et gardées dans chacun des pixels de l'image.

Différentes approches ont été proposées pour tenter de rendre les dispositifs bistables compatibles avec un affichage en niveaux de gris.

Pour les afficheurs rapides (par exemple écrans vidéo) il est possible d'obtenir des niveaux de gris par digitalisation de l'image et découpe temporelle de la trame vidéo en plusieurs sous-trames avec des durées en rapport 1 : 2 : 4 ...Dans chaque sous-trame l'état du pixel varie pour assurer en moyenne le niveau digital d'intensité voulue. Cette approche, adaptée seulement aux dispositifs ultra-rapides (par exemple aux afficheurs cristaux liquides ferroélectriques) présente des nombreuses difficultés. Elle demande des pilotes compliqués (besoin de mémoire de trame). De plus le multiplexage est difficile (besoin de réaliser des sous-trames très courtes). Enfin cette approche sacrifie la bistabilité. En effet, les niveaux de gris ne sont pas des états réels du pixel mais une moyenne temporelle des états bistables et quand le rafraîchissement de l'image est coupé, l'image s'arrête. Elle affiche le dernier état des pixels. C'est une image en noir et blanc.

Une autre approche consiste à sous diviser spatialement chacun des pixels - l'image digitalisée est affichée comme une moyenne spatiale des états en noir et blanc réalisés dans les sous-pixels. La bistabilité de l'image est conservée, mais le dispositif est compliqué (très petites dimensions des sous-pixels, augmentation considérable du nombre des sous-pixels à adresser pour la même résolution spatiale, difficultés de multiplexage).

La présente invention a pour but de proposer de nouveaux moyens permettant de réaliser un affichage à base de cristaux liquides, propre à permettre l'obtention de niveaux de gris.

Le document [5] présente par exemple un dispositif nématique d'affichage bistable comprenant une couche de cristaux liquides nématique, ayant deux textures métastables qui diffèrent entre elles d'une torsion de 360°, qui est compatible avec un affichage en niveaux de gris.

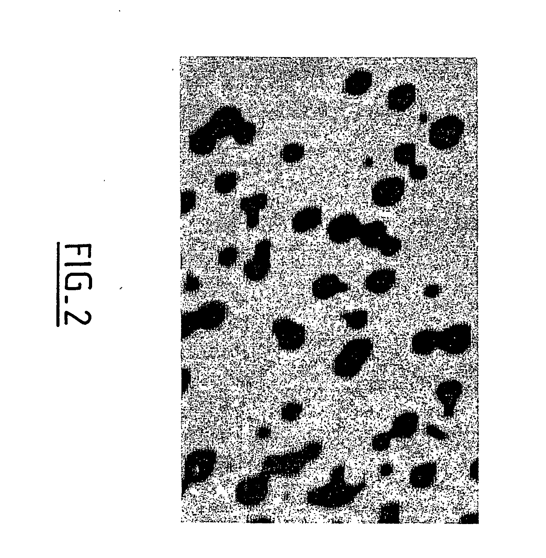

Il met en oeuvre les fluctuations aléatoires induites du flux ou de la température du directeur nématique à travers la cellule pour générer une échelle de gris. Pour cela, il applique :
- un champ de réinitialisation qui oriente tous les cristaux dans la position P_{2π} de torsion à 360°, en appliquant une grande impulsion, suivie par une courte relaxation (comme indiqué sur la figure 2), puis
- une impulsion donnée courte, proche de la transition de Fredericks.

Alors, selon les variations aléatoires du directeur local, le procédé créé une texture blanche ou une texture noire P_{2π} et obtient ainsi des niveaux de gris.

Ce but est atteint dans le cadre de la présente invention grâce à un dispositif nématique d'affichage bistable selon la revendication 1.

Dans le cadre de la présente invention, le cristal liquide utilisé peut être dopé pour devenir chiral et correspondre à un cholestérique.

La présente invention concerne également un procédé d'affichage mettant en oeuvre un dispositif nématique d'affichage bistable comprenant :
- une couche de cristal liquide nématique, placée entre deux substrats munis d'électrodes et de moyens d'alignement qui assurent des ancrages monostables du cristal liquide sur les surfaces, la symétrie et la force d'au moins un des ancrages permettant la cassure de l'ancrage sous champ électrique perpendiculaire aux substrats, et
- des moyens pour appliquer un champ électrique sur le cristal liquide, entre les deux substrats, et casser l'ancrage sur au moins une des surfaces, avec un passage transitoire du directeur de surface parallèle au champ et relaxation après la coupure du champ vers l'une ou l'autre de deux textures bistables ou métastables, qui différent entre elles d'une torsion de 180° et sont toutes les deux compatibles avec les ancrages monostables,
caractérisé par le fait que le procédé comprend les étapes consistant à :
- réaliser, après la cassure de l'ancrage, des textures, mixtes où lesdites textures bistables coexistent en proportion contrôlée dans un même pixel, séparées par des lignes de disinclinaison 180° en volume ou par des murs de réorientation 180° sur une des surfaces, et
- stabiliser à long terme les textures mixtes par transformation des lignes de volume en murs de surface et immobilisation de ces murs sur la surface, les moyens de stabilisation comprenant des moyens aptes à appliquer des impulsions électriques sur le cristal liquide dont l'amplitude est comprise entre le seuil de Fredericks et le seuil de cassure de l'ancrage.

D'autres caractéristiques, buts et avantages de la présente invention apparaitront à la lecture de la description détaillée qui va suivre, et en regard des dessins annexés, donnés à titre d'exemples non limitatifs et sur lesquels :
- la figure 1 représente schématiquement une cellule d'affichage bistable à cristaux liquides conforme à l'état de la technique, les figures 1a et 1b illustrant deux états stables de la cellule et la figure 1c illustrant un état transitoire sous champ électrique,
- la figure 2 représente une photographie d'un pixel d'une cellule d'affichage à cristaux liquides conforme à la présente invention,
- la figure 3 représente l'architecture conforme à la présente invention résultant d'un défaut de surface sur une plaque de confinement, la figure 3a représentant la cellule sous champ électrique et la figure 3b représentant la cellule après coupure du champ électrique,
- les figures 4a et 4b illustrent deux types de lignes de défaut susceptibles d'exister dans un dispositif d'affichage conforme à la présente invention,
- la figure 5 représente schématiquement l'énergie d'une ligne de défaut de volume V en fonction de sa distance z par rapport à la surface;
- la figure 6 représente l'orientation du directeur du nématique, sous champ électrique modéré, intermédiaire entre le seuil de Frederiks et le seuil de cassure de l'ancrage,
- les figures 7a et 7b représentent schématiquement l'évolution d'une ligne de disinclinaison en volume vers un mur de surface,
- la figure 8 représente, pour deux polarités, l'amplitude d'une tension de « collage » apte à transformer des lignes de disinclinaison de volume en murs de surface,
- la figure 9 représente la transmission optique d'une cellule munie de deux polariseurs, en fonction de l'amplitude d'impulsions de commutation de durée fixe, et
- la figure 10 montre six niveaux de gris différents obtenus sur une cellule conforme à la présente invention.

L'architecture typique d'un pixel nématique bistable, commuté par cassure de l'ancrage, est schématisée sur la figure 1. Une fine couche de cristal liquide nématique 10, d'épaisseur d<5 µm, de préférence d<2 µm, est contenue entre deux substrats 20, 30 (en verre, plastique, etc.). De tels substrats 20, 30 sont également dénommés plaques ou lames. Deux électrodes 22, 32, dont au moins une est transparente, sont déposées respectivement sur la face intérieure des substrats 20, 30, pour permettre d'appliquer au cristal liquide un champ électrique perpendiculaire aux substrats 20, 30. Des couches d'alignement 24 et 34 définissent des ancrages monostables sur les substrats 20, 30: en absence de champ, sur chaque surface, une orientation unique du directeur nématique **n** est imposée par la couche d'alignement 24, 34. Cette direction est appelée axe facile **e**.

Sur la lame 20 (lame maître), l'alignement est planaire ou oblique, avec une forte énergie d'ancrage zénithale : pendant la commutation, sous fort champ électrique, l'orientation du directeur de surface **n**₁ reste proche de l'axe facile **e**₁ et après la coupure du champ, **n**₁ revient parallèle à **e**₁.

Sur la lame 30 (lame esclave), l'orientation est planaire (axe facile **e**₂ parallèle au plan de la cellule) et l'ancrage zénithal est faible ou modéré. Sous fort champ électrique, l'ancrage de cette lame casse (figure 1c) : le directeur à la surface n₂ s'oriente parallèlement au champ et perpendiculairement à **e**₂. Cette orientation correspond au maximum de l'énergie d'ancrage et à un couple d'ancrage nul. Après la coupure du champ électrique, le directeur **n**₂ se trouve en équilibre instable (absence de couple) et peut revenir vers l'équilibre de deux façons différentes : avec n₂ parallèle (T_{O}, figure 1a) ou antiparallèle (T₁₈₀, figure 1b) à **e**₂. En effet, ces deux états sont également compatibles avec l'ancrage monostable (le nématique est un système d'ordre quadripolaire et les états **n**₂ et -**n**₂ sont équivalents). De cette façon après la commutation par cassure d'ancrage on réalise l'une ou l'autre des textures (T₀ ou T₁₈₀).

Le choix de la texture finale se fait par de faibles couplages entre les deux ancrages, transmis par le nématique 10, qui perturbent l'équilibre instable de la lame esclave 30 à la coupure du champ. Une coupure brusque favorise les couplages hydrodynamiques (effet backflow de volume et de surface) et produit la texture tordue T₁₈₀. Une coupure graduelle favorise le couplage statique (par élasticité de courbure) et impose l'état final quasi-uniforme T₀.

Les deux textures T₀ et T₁₈₀ sont topologiquement distinctes : une transition continue entre elles est impossible car elle exige une cassure ou de l'ancrage ou de l'ordre nématique. Pour un nématique achiral la texture T₁₈₀ est métastable. C'est à dire qu'elle a une énergie plus forte que T₀, mais une forte barrière énergétique l'empêche de se transformer spontanément en T₀ en absence de champ. A long terme T₁₈₀ peut quand même se transformer en T₀ par nucléation et propagation de défauts (lignes de disinclinaison 180°). On peut empêcher cette commutation parasite par chiralisation du nématique avec des dopants chiraux à un pas P proche de P=4d. De cette façon les énergies des deux textures s'égalisent et une vraie bistabilité est atteinte : on obtient un afficheur nématique bistable qui fonctionne en noir et blanc ou plus précisément en « tout ou rien ».

Le dispositif d'affichage à niveaux de gris conforme à la présente invention, reprend la structure de base illustrée sur la figure 1 et précédemment décrite.

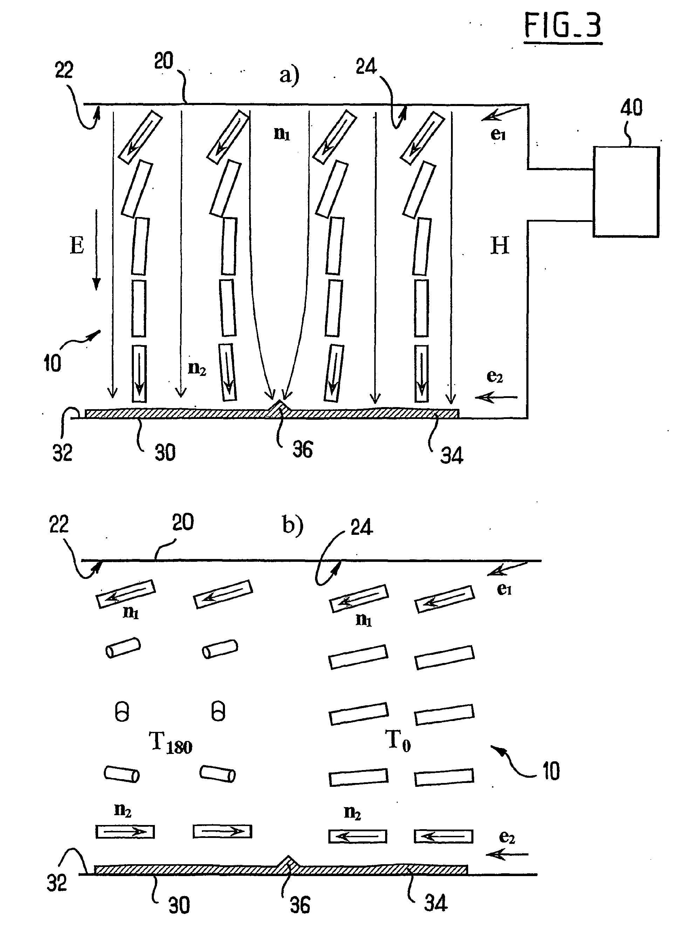

On retrouve en effet sur les figures 3 et suivantes, qui illustrent des cellules conformes à la présente invention, deux plaques 20, 30 munies d'électrodes 22, 32, et de couches d'alignement 24 et 34, conformes aux dispositions précédemment décrites. On aperçoit par ailleurs sur la figure 3, schématiquement illustrés, des moyens 40 reliés aux électrodes 22, 32 et adaptés pour appliquer, entre celles-ci, et donc sur le matériau cristal liquide 10, des impulsions électriques de commande d'amplitude et de durée contrôlées.

Les inventeurs ont en effet démontré que dans le même type de dispositif, il est possible de réaliser et de stabiliser des états gris analogiques intermédiaires contrôlables pour obtenir un afficheur bistable à teintes de gris. Ces états correspondent à des textures « mixtes », c'est à dire que les deux textures bistables coexistent dans le même pixel (figure 2). L'état mixte est donc un mélange aléatoire de deux types de domaines - les domaines « inscrits » (texture T₁₈₀, noire entre polariseurs croisés) et domaines « effacés » (texture T₀, blanche en orientation diagonale entre polariseurs croisés). Localement, un seul état est réalisé dans chacun des domaines, uniforme sur toute la surface du domaine. La surface des domaines est de l'ordre de 100.d², petite par rapport à la surface totale du pixel, et un grand nombre de micro-domaines sont réalisés dans le même pixel, permettant de réaliser un grand nombre de niveaux de gris par variation de leur densité moyenne. L'intensité transmise ou réfléchie du pixel est donc une moyenne pondérée des intensités des deux types de domaines et peut varier continuellement entre 0% (état noir) et 100% (état blanc).

L'origine des états mixtes est l'équilibre instable du directeur de surface après la cassure de l'ancrage de la lame esclave 30. Dans cet état la moindre perturbation suffit pour induire une relaxation rapide du directeur nématique sur la surface **n**₂ vers l'une ou l'autre des deux positions parallèle ou antiparallèle à **e**₂ (figure 1), et donc vers la texture finale T₀ ou T₁₈₀. Si la tension de l'impulsion de commande dépasse largement le seuil de cassure de l'ancrage, les couplages statiques et dynamiques entre les deux surfaces sont forts et tout le pixel va commuter vers une seule texture uniforme (état blanc ou noir). Par contre, au ras du seuil de cassure les couplages sont faibles et les perturbations locales (on peut les considérer comme un «bruit» local qui se superpose au signal de commande) sont suffisantes pour induire les états mixtes.

Les inventeurs ont déterminé que des perturbations locales peuvent être créées en contrôlant une dispersion de la force d'ancrage sur la surface. L'énergie locale d'ancrage sur la surface peut en effet varier dans certaines limites qui dépendent de la nature et de l'uniformité des couches d'alignement. De cette façon, un champ de commande uniforme peut localement dépasser ou ne pas dépasser le seuil de cassure de l'ancrage. Il induira des textures finales mixtes, dont le niveau de gris est une fonction de la tension des impulsions.

Les inventeurs ont également démontré que les perturbations locales peuvent être créées par la topographie de la surface, par exemple une épaisseur variable de la couche d'alignement. Cette topographie peut être périodique (réseau unidimensionnel ou bidimensionnel de surface) ou aléatoire, par exemple une surface micro structurée. Dans ces cas la tension de cassure de l'ancrage varie avec l'épaisseur locale du film cristal liquide car le champ n'est plus uniforme. Il est écranté plus ou moins fortement par les propriétés diélectriques de la couche d'ancrage.

Les inventeurs ont également déterminé que des textures mixtes peuvent être obtenues en appliquant des champs électriques légèrement non uniformes sur un pixel, en utilisant par exemple des électrodes dont la résistance ou l'état de surface ne sont pas uniformes. Cela donne un champ dont l'intensité sur la surface ou l'orientation varie (champ légèrement oblique), ce qui perturbe plus ou moins fortement la cassure de l'ancrage.

Sur la figure 3 est présenté schématiquement le champ électrique inhomogène créé autour d'une irrégularité 36 de la surface de l'électrode 32 sur la lame esclave 30 et les perturbations induites dans la texture sous champ (figure 3a). Après relaxation à la coupure du champ (figure 3b) une texture mixte est obtenue, avec les deux textures bistables induites des deux cotés de l'irrégularité de surface.

Un moyen conforme à la présente invention, pour réaliser les textures mixtes, est de provoquer, pendant l'impulsion de commande, des instabilités de texture transitoires, d'origine hydrodynamique, flexoélectrique ou dues à la polarité intrinsèque de la surface. Toutes ces instabilités, d'origine dynamique ou statique, conduisent à des déviations périodiques du directeur nématique par rapport à son état d'équilibre en volume et sur la surface, avec une période comparable à l'épaisseur de la cellule. Sous fort champ l'amplitude de ces instabilités est très faible, mais quand le champ est proche du seuil de cassure elles peuvent être suffisantes pour induire des textures mixtes.

Un autre moyen conforme à la présente invention, permettant de réaliser des textures mixtes, est lié aux écoulements transitoires de cisaillement du cristal liquide pendant l'application du champ (effet backflow) sur la surface et dans le volume, qui perturbent aussi l'orientation du directeur. Sur des surfaces inhomogènes ou rugueuses ces écoulements provoquent des légères inhomogénéités transitoires de l'orientation du directeur sur la surface. La coupure du champ après la cassure de l'ancrage mais avant la relaxation complète des écoulements induit donc encore une fois une texture mixte du pixel.

Les inventeurs ont cependant déterminé que, une fois créées, les textures mixtes peuvent évoluer dans le temps et relaxer vers des états uniformes noir ou blanc par propagation des lignes des défauts, qui séparent les domaines correspondant aux deux textures bistables principales.

Plus précisément, ils ont déterminé que dans la géométrie de l'afficheur qui fait l'objet de la présente invention deux types de lignes de défauts peuvent exister, avec des structures et des mobilités différentes.

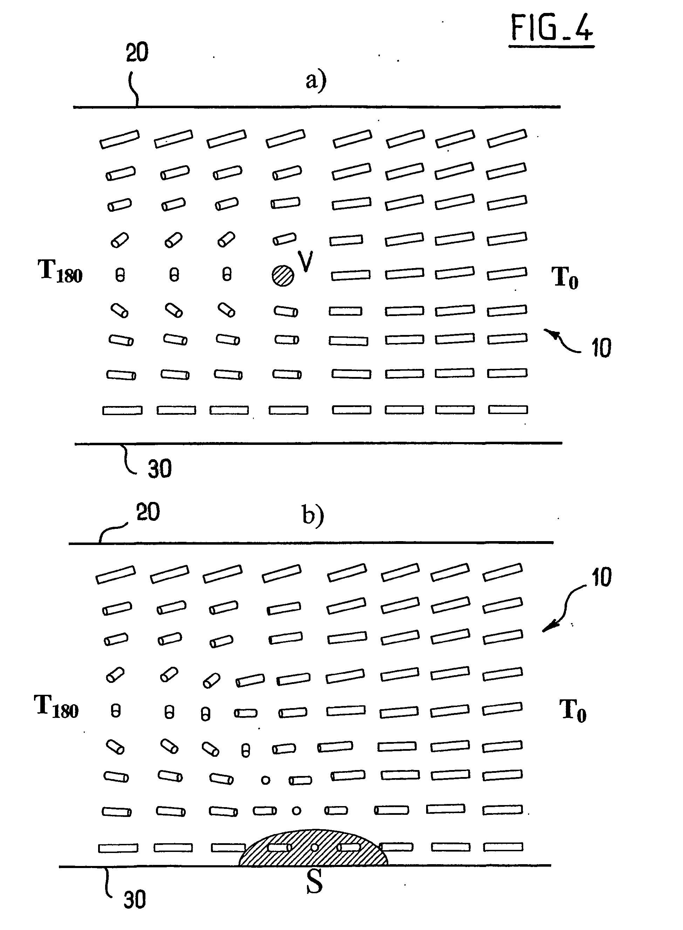

Un premier type de ligne de défauts est illustré sur la figure 4a. Il s'agit de lignes de disclinaison 180°. Ces lignes de défaut (schématisées sous forme de la région V sur la figure 4a), ont un coeur fondu, isotrope ou biaxe. A ce niveau le paramètre d'ordre nématique s'annule ou même change de signe. En équilibre ces lignes sont disposées dans le plan médian de la cellule et forment des boucles fermées qui entourent les domaines qui composent la texture mixte. Ces lignes sont très mobiles et peuvent se déplacer avec un frottement visqueux dans le plan du dispositif sous l'action des forces élastiques ou des écoulements. Si l'énergie de distorsion par unité de surface des deux textures bistables est différente (par exemple nématique achiral ou cholestérique avec un pas mal adapté à l'épaisseur de la cellule) une force élastique agit sur la ligne et la déplace. Localement, après le passage de la ligne, la texture de plus haute énergie (texture métastable) est remplacée par l'autre texture. La surface occupée par la texture métastable diminue progressivement et à long terme tout le pixel s'uniformise dans l'état stable, (blanc ou noir). Même pour des textures bistables avec la même énergie (cas d'un pas cholestérique bien adapté à l'épaisseur de la cellule) la tension de la ligne de défaut (énergie par unité de longueur) fait rétrécir et disparaître à long terme les boucles de disclinaison, induisant une évolution lente du niveau de gris vers 0% ou 100%.

Une autre structure possible des lignes de défauts est schématisée sur la figure 4b. Il s'agit dans ce cas de murs de réorientation du directeur de surface de 180° (la région S sur la figure 4b), qui séparent les régions où existent les deux textures bistables. A travers le mur, le directeur de surface tourne progressivement de 180°. Ces lignes, localisées sur la surface, sont beaucoup moins mobiles que les lignes de volume à cause de leur viscosité effective plus élevée et, surtout, d'une friction « solide » due à l'accrochage de la ligne sur les irrégularités de surface et/ou à la mémoire locale de l'ancrage. Due à la friction solide, il existe un seuil de la force appliquée sur la ligne au-dessous duquel la ligne reste « collée » sur la surface et ne se déplace pas. Pour la plupart des surfaces ce seuil est très élevé et même pour les nématiques achiraux la différence d'énergie entre les deux textures n'est pas suffisante pour dépasser ce seuil. Grâce aux « collage » des lignes de défauts, une bistabilité infinie est obtenue pour les états de niveau de gris arbitraire.

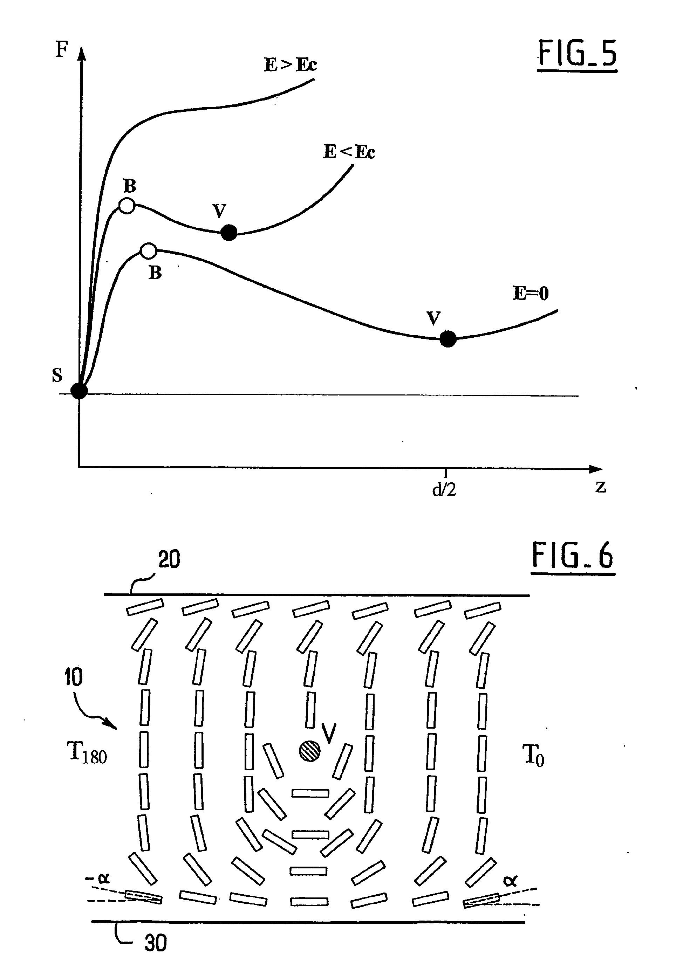

L'énergie par unité de longueur des deux types de défauts est très différente (figure 5). Les murs de surface ont moins d'énergie de distorsion volumique totale et pas du tout d'énergie de coeur (ils n'ont pas un coeur fondu et dans le mur l'ordre nématique n'est pas fortement perturbé). Par contre, ils ont une forte contribution d'énergie d'ancrage due à la désorientation du directeur de surface dans le mur par rapport à l'axe facile imposé par la couche d'alignement. En général, l'énergie totale est plus basse pour les murs de surface, ce qui favorise la transformation des lignes de disclinaison en murs de surface. Pour obtenir cette transformation il est nécessaire de rapprocher le coeur de la ligne de la surface (le coeur « traverse » la surface et devient un coeur virtuel). Sur la figure 5 est schématisée l'énergie de la ligne de volume V en fonction de sa distance z par rapport à la surface. Une forte barrière (B) d'énergie d'ancrage sépare les états S (mur de surface) et V (ligne en volume) et empêche la ligne de disclinaison de se rapprocher suffisamment près de la surface. En raison de cette barrière, les lignes de volume V restent, en absence de champ électrique, dans le milieu de la cellule, sans se transformer en murs de surface.

Après la cassure de l'ancrage, quand une texture mixte se forme, les deux types de structure des lignes de défauts sont présentes, parfois même sur des régions différentes de la même boucle. Les lignes de volume très mobiles vont donc se déplacer sous l'action de la force de tension de ligne et éventuellement de la force due à une différence des énergies des deux textures bistables (si le pas chiral dévie de sa valeur optimale). Le pixel va donc relaxer à long terme vers un autre niveau de gris, différent de celui imposé par l'impulsion de commande, car seulement les domaines complètement entourés par des lignes de surface vont survivre.

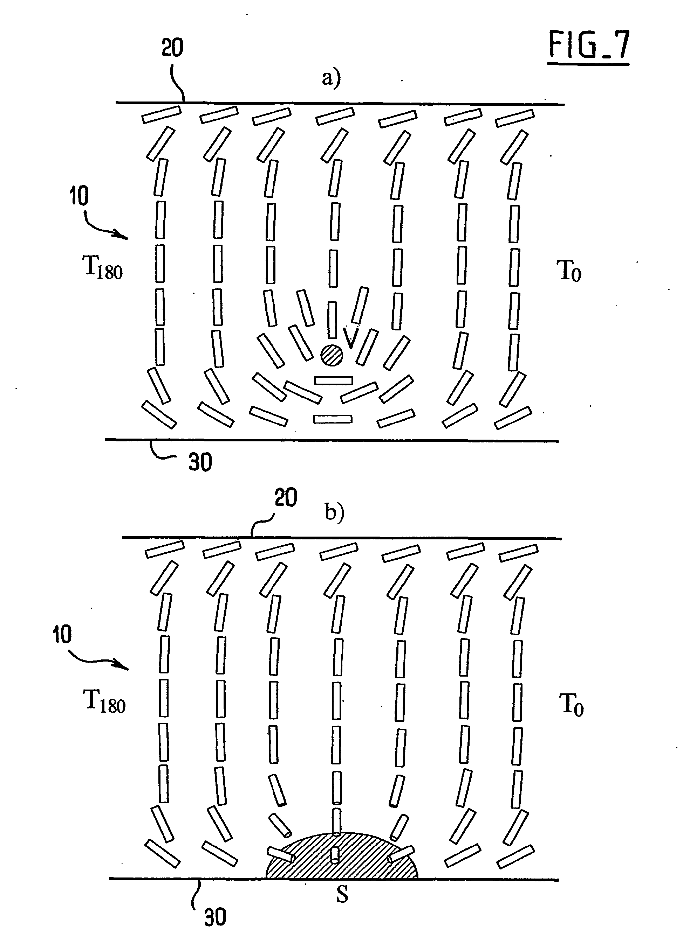

Pour obtenir des niveaux de gris stables à long terme il est donc nécessaire de « coller » toutes les lignes de disinclinaison sur la surface par leur transformation en murs de réorientation 180°. Les inventeurs ont découvert que cette transformation peut être obtenue efficacement par l'application d'impulsions électriques de tension et durée appropriées. Sous champ électrique modéré, intermédiaire entre le seuil de Frederiks et le seuil de cassure de l'ancrage, le directeur du nématique s'oriente dans le volume, parallèlement au champ, à l'exception des régions proches des deux surfaces (figure 6). Les deux textures bistables principales se transforment sous champ d'une façon différente : T₀ s'incline partout dans la même direction, tandis que la texture « demi-tour » en torsion T₁₈₀ conserve sa contrainte topologique de rotation de 180°, devenant un « demi-tour » en flexion. A proximité de la lame maître 20, d'ancrage fort et oblique, la distorsion du directeur est uniforme. Sur la lame esclave 30, d'ancrage planaire faible, le directeur de surface est légèrement oblique à cause du couple électrique. Mais dans les deux textures, les signes sont opposés (± α). Un mur de réorientation de surface 2α est donc créé en face de la disinclinaison. Entre le mur de surface et la ligne de volume le directeur reste perpendiculaire au champ électrique sous la contrainte topologique et une forte énergie électrique est stockée dans cette région. Pour minimiser cette énergie, la ligne est poussée par la force électrique correspondante vers la surface (figure 7a). Si la force électrique est assez grande pour dépasser la barrière énergétique, la ligne de disinclinaison se transforme en mur de surface (figure 7b) avec un coeur virtuel.

La tension seuil U_{c} pour le collage des défauts, c'est à dire pour la transformation de lignes de disinclinaison en volume, en murs de surface, dépend de l'épaisseur de la cellule, de la force d'ancrage sur la surface, de la polarité et de la durée de l'impulsion τ (à cause de la friction pour le transport de la ligne vers la surface). La valeur typique de U_{c} est de quelques volts.

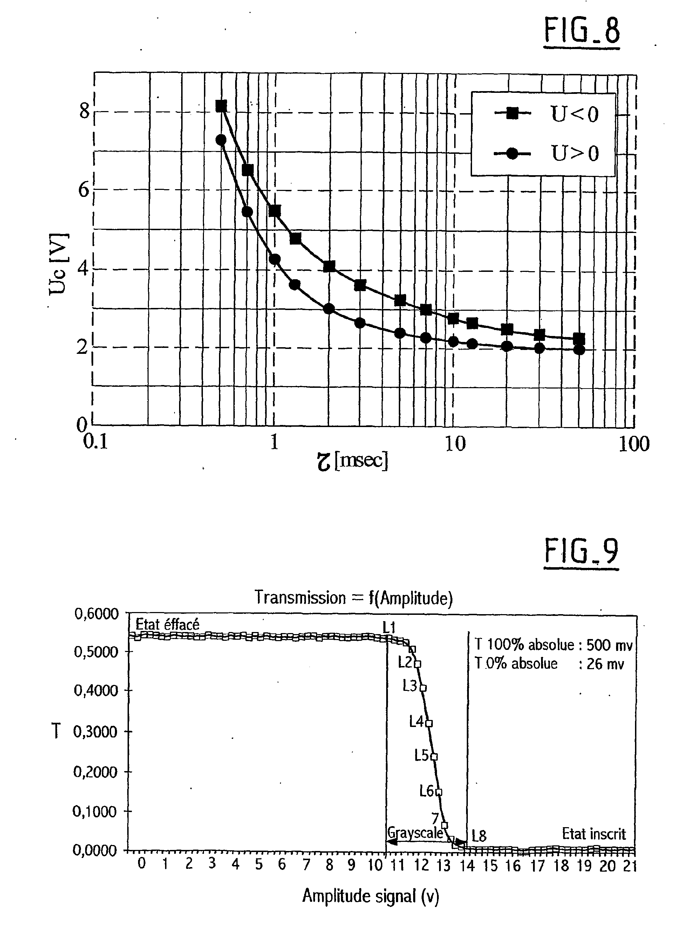

Sur la figure 8 est présentée la dépendance U_{c}(τ), mesurée expérimentalement pour une cellule conforme à la présente invention du type précédemment décrit. On voit que des signaux de « collage » relativement faibles et courts permettent de stabiliser les lignes de défauts et d'obtenir une bistabilité infinie des textures mixtes. Ces signaux peuvent être envoyés indépendamment des signaux de commutation, après la relaxation de l'ancrage cassé, ou ils peuvent être intégrés dans la dernière partie des signaux de commande.

### Exemple de réalisation :

L'exemple ci-dessous correspond à un exemple non limitatif du dispositif proposé dans la présente invention, réalisé et étudié par les inventeurs.

### Une cellule cristal liquide 10 d'épaisseur 1,6 µm a été montée entre deux lames de verre 20, 30 de 1,1 mm d'épaisseur. Ces lames 20, 30 étaient recouvertes d'une couche transparente et conductrice d'oxyde mixte d'indium et d'étain. La lame maître 20 a reçu une évaporation rasante à 85° de mono-oxyde de silicium. L'ancrage du cristal liquide 10 est ainsi fort et incliné d'environ 30° sur cette lame maître 20. La lame esclave 30 a reçu une évaporation inclinée à 75°. L'ancrage obtenu sur cette lame esclave 30 est planaire faible. Le cristal liquide utilisé est le pentylcyanobiphényl (5CB) dopé par le matériau S811 (Merck) pour obtenir une torsion spontanée de 90° sur l'épaisseur de la cellule à la température du laboratoire. Les deux états de la cellule possèdent ainsi la même énergie.

Les inventeurs ont observé, à l'aide d'un microscope muni d'un dispositif classique d'enregistrement des images, l'évolution des domaines après l'application d'impulsions de commutation proches du seuil.

La courbe sur la figure 8 donne les valeurs d' impulsions de « collage » des deux polarités qui permettent de figer les domaines dans cette cellule. La différence entre les deux polarités s'explique en tenant compte du champ local produit par la surface.

La courbe de la figure 9 montre la transmission optique de la cellule munie de deux polariseurs en fonction de l'amplitude d'impulsions de commutation de durée fixe (800 µs). Sur cette figure 9, on note un état blanc, pour une amplitude d'impulsions de commutation inférieure à 10V, des états de gris qui évoluent progressivement du blanc vers le noir, pour des amplitudes d'impulsions de commutation évoluant entre 10 et 14V, et un état noir pour des tensions de commutation supérieures à 14V. La stabilité infinie des niveaux de gris (résultant de l'application des impulsions de commutation d'amplitude comprise entre 10 et 14V) a été obtenue en appliquant, après ces impulsions de commutation, un palier de collage de 5 volts et de même durée (800 µS). Plus généralement cette tension de collage est comprise entre 2V et 10V.

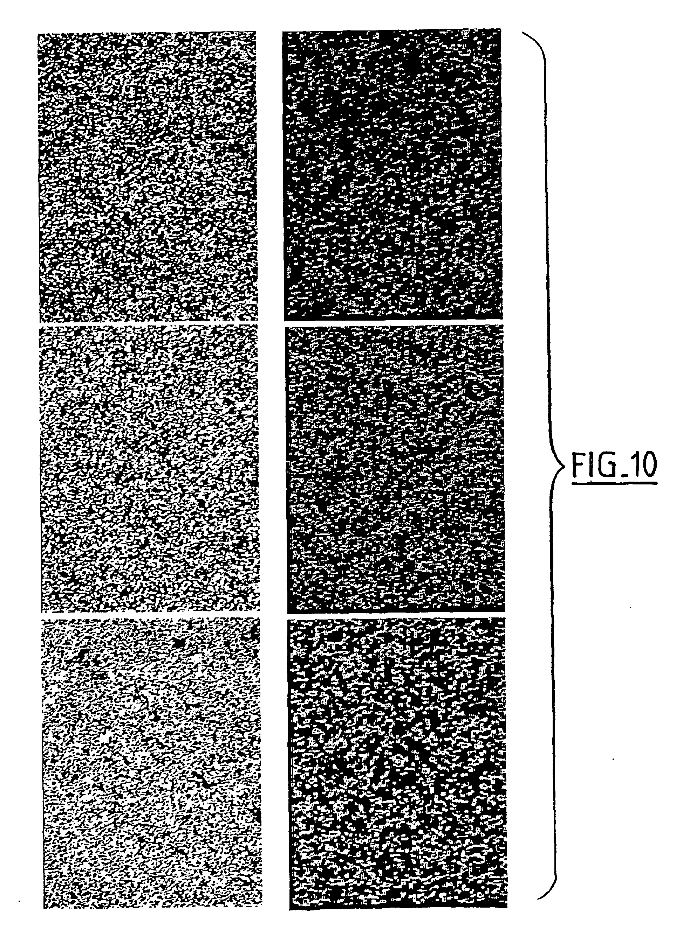

La figure 10 montre six niveaux de gris différents réalisés dans cette cellule (états L2 à L7 sur la figure 9).

En résumé, la présente invention propose un dispositif d'affichage nématique bistable à niveaux de gris. Le dispositif utilise un principe d'affichage connu dans sa structure générale, mettant en oeuvre deux textures bistables tordues respectivement de 0° et 180°. La commutation est obtenue par cassure de l'ancrage sous l'action d'impulsions de commande. Avec des signaux proches du seuil de cassure, un état mixte est obtenu dans chaque pixel, les deux textures bistables étant réalisées respectivement dans des micro-domaines. Le rapport des surfaces occupées par les deux états (et donc le niveau de gris correspondant) est contrôlé par la tension de commande. L'état gris du pixel est conservé sans changement à long terme, par une transformation contrôlée des lignes de disclinaison en volume entre les micro-domaines en murs de surface (stables a l'infini à cause du frottement solide sur la surface).

Bien entendu, la présente invention n'est pas limitée au mode de réalisation particulier qui vient d'être décrit, mais s'étend à toutes variantes conformes à son esprit.

### BIBLIOGRAPHIE

[1] "Fast bistable nematic display using monostable surface switching", I. Dozov, M. Nobili; G. Durand, Appl. Phys. Lett. 70, 1179 (1997),
[2] WO-A-97 17632,
[3]"Bistable display device based on nematic liquid crystals allowing grey tones", R. Barberi, G. Durand, R. Bartolino, M. Giocondo, I. Dozov, J Li, EP 0773468, US 5995173, JP 9274205 (1998),
[4] D. K. Yang, J. L. West, L ; C. Chien and J. W. Doane J. Appl. Phys. 76,1331 (1994),
[5] "Random domain formation in 0° - 306° bistable nematic twist cells", H. Bock, Appl. Phys. Lett., 2905-2097 (1998).

## Revendications

1. Dispositif nématique d'affichage bistable comprenant :
une couche de cristal liquide nématique (10), placée entre deux substrats (20, 30) munis d'électrodes (22, 32) et de moyens d'alignement (24, 34) qui assurent des ancrages monostables du cristal liquide (10) sur les surfaces, la symétrie et la force d'au moins un des ancrages permettant la cassure de l'ancrage sous champ électrique perpendiculaire aux substrats (20, 30),
. des moyens (40) pour appliquer un champ électrique sur le cristal liquide, entre les deux substrats (20, 30), et casser l'ancrage sur au moins une des surfaces, avec un passage transitoire du directeur de surface parallèle au champ et relaxation après la coupure du champ vers l'une ou l'autre de deux textures bistables ou métastables, qui différent entre elles d'une torsion de 180° et sont toutes les deux compatibles avec les ancrages monostables,
**caractérisé par le fait qu'**il comprend en outre :
des moyens de contrôle (40) pour réaliser, après la cassure de l'ancrage, des textures mixtes où lesdites textures bistables coexistent en proportion contrôlée dans un même pixel, séparées par des lignes de disinclinaison 180° en volume ou par des murs de réorientation 180° sur une des surfaces, et
des moyens (40) de stabilisation à long terme des textures mixtes par transformation des lignes de volume en murs de surface et l'immobilisation de ces murs sur la surface, les moyens de stabilisation comprenant des moyens aptes à appliquer des impulsions électriques sur le cristal liquide dont l'amplitude est comprise entre le seuil de Fredericks et le seuil de cassure de l'ancrage.

2. Dispositif selon la revendication 1, **caractérisé par le fait que** le cristal liquide (10) est dopé pour être chiral et correspondre à un cholestérique.

3. Dispositif selon l'une des revendications 1 ou 2, **caractérisé par le fait que** les moyens (40) conçus pour appliquer un champ électrique sur le cristal liquide, sont adaptés pour appliquer un champ électrique proche du seuil de cassure des ancrages du cristal liquide, sur l'une au moins des surfaces.

4. Dispositif selon l'une des revendications 1 à 3, **caractérisé par le fait que** les moyens de contrôle (40) comprennent au moins une couche d'alignement dont la surface est ondulée périodiquement ou aléatoirement.

5. Dispositif selon l'une des revendications 1 à 4, **caractérisé par le fait que** les moyens de contrôle (40) comprennent des moyens aptes à définir une dispersion de la force d'ancrage sur l'une au moins des surfaces.

6. Dispositif selon la revendication 5, **caractérisé par le fait que** les moyens de contrôle (40) comprennent des couches d'alignement non uniformes.

7. Dispositif selon l'une des revendications 5 ou 6, **caractérisé par le fait que** les moyens de contrôle (40) sont adaptés pour appliquer un champ électrique de commande uniforme.

8. Dispositif selon l'une des revendications 1 à 4, **caractérisé par le fait que** les moyens de contrôle comprennent des moyens (40) aptes à appliquer des champs électriques légèrement non uniformes sur un pixel.

9. Dispositif selon la revendication 8, **caractérisé par le fait que** les moyens de contrôle (40) comprennent des électrodes (22, 32) dont la résistance ou l'état de surface ne sont pas uniformes.

10. Dispositif selon l'une des revendications 1 à 4, **caractérisé par le fait que** les moyens de contrôle comprennent des moyens (40) aptes à provoquer, pendant une impulsion de commande, des instabilités de texture transitoires, d'origine hydrodynamique, flexoélectrique ou dues à la polarité intrinsèque de la surface.

11. Dispositif selon l'une des revendications 1 à 4, **caractérisé par le fait que** les moyens de contrôle comprennent des moyens (40) aptes à provoquer, pendant une impulsion de commande, des écoulements transitoires de cisaillement du cristal liquide.

12. Dispositif selon l'une des revendications 1 à 11, **caractérisé par le fait que** les moyens (40) de stabilisation comprennent des moyens aptes à appliquer des impulsions électriques sur le cristal liquide.
les moyens (40) de stabilisation comprenant des moyens aptes à appliquer des impulsions électriques sur le cristal liquide dont l'amplitude est comprise entre le seuil de Frederiks et le seuil de cassure de l'ancrage.

13. Dispositif selon la revendication 12, **caractérisé par le fait que** les moyens (40) de stabilisation comprennent des moyens aptes à appliquer des impulsions électriques d'une amplitude de quelques volts, sur le cristal liquide.

14. Dispositif selon l'une des revendications 12 ou 13, **caractérisé par le fait que** les moyens (40) de stabilisation comprennent des moyens aptes à appliquer des impulsions électriques d'une amplitude comprise entre 2V et 10V, de préférence de l'ordre de 5V, sur le cristal liquide.

15. Dispositif selon l'une des revendications 12 à 14, **caractérisé par le fait que** les moyens (40) de stabilisation comprennent des moyens aptes à appliquer des impulsions électriques sur le cristal liquide, indépendamment des signaux de commutation assurant la cassure de l'ancrage, après la relaxation de l'ancrage cassé.

16. Dispositif selon l'une des revendications 12 à 14, **caractérisé par le fait que** les moyens (40) de stabilisation comprennent des moyens aptes à appliquer sur le cristal liquide, des impulsions électriques intégrés dans la dernière partie des signaux de commande assurant la cassure de l'ancrage.

17. Dispositif selon l'une des revendications 1 à 16, **caractérisé par le fait que** les moyens (40) conçus pour appliquer un champ électrique sur le cristal liquide, sont adaptés pour appliquer un champ électrique variable, proche du seuil de cassure des ancrages du cristal liquide, sur l'une au moins des surfaces, l'ampitude du champ permettant de contrôler le niveau de gris obtenu.

18. Procédé d'affichage mettant en oeuvre un dispositif nématique d'affichage bistable comprenant :
. une couche de cristal liquide nématique (10), placée entre deux substrats (20, 30) munis d'électrodes (22, 32) et de moyens d'alignement (24, 34) qui assurent des ancrages monostables du cristal liquide sur les surfaces, la symétrie et la force d'au moins un des ancrages permettant la cassure de l'ancrage sous champ électrique perpendiculaire aux substrats, et
des moyens (40) pour appliquer un champ électrique sur le cristal liquide, entre les deux substrats, et casser l'ancrage sur au moins une des surfaces, avec un passage transitoire du directeur de surface parallèle au champ et relaxation après la coupure du champ vers l'une ou l'autre de deux textures bistables ou métastables, qui différent entre elles d'une torsion de 180° et sont toutes les deux compatibles avec les ancrages monostables,
**caractérisé par le fait que** le procédé comprend les étapes consistant à :
. réaliser, après la cassure de l'ancrage, des textures mixtes où lesdites textures bistables coexistent en proportion contrôlée dans un même pixel, séparées par des lignes de disinclinaison 180° en volume ou par des murs de réorientation 180° sur une des surfaces, et
. stabiliser à long terme les textures mixtes par transformation des lignes de volume en murs de surface et immobilisation de ces murs sur la surface, en appliquant des impulsions électriques sur le cristal liquide dont l'amplitude est comprise entre le seuil de Frederiks et le seuil de cassure de l'ancrage.

## Claims

1. Nematic bistable display device comprising:
• a nematic liquid-crystal layer (10) placed between two substrates (20, 30) provided with electrodes (22, 32) and with anchoring means (24, 34) which ensure monostable surface anchoring states of the liquid crystal (10), the symmetry and the force of at least one of the anchoring states allowing the anchoring to be broken in an electric field perpendicular to the substrates (20, 30);
• means (40) for applying an electric field to the liquid crystal, between the two substrates (20, 30), and for breaking the anchoring to at least one of the surfaces, with a transient passage of the surface director parallel to the field and relaxation after the field has been cut off towards one or other of two bistable or metastable textures, which differ from each other by a 180° twist and are both compatible with monostable anchoring states;
**characterized in that** it furthermore includes:
• control means (40) for producing, after the anchoring has been broken, hybrid textures in which the said bistable textures coexist in a controlled proportion in the same pixel, the said textures being separated by 180° disclination lines in the volume or by 180° reorientation walls on one of the surfaces; and
• means (40) for long-term stabilization of the hybrid textures by transformation of the volume lines into surface walls and immobilization of these walls on the surface, the stabilizing means (40) comprising means capable of applying electrical pulses to the liquid crystal, the amplitude of which is between the Fredericks threshold and the anchoring breaking threshold.

2. Device according to Claim 1, **characterized in that** the liquid crystal (10) is doped so as to be chiral and to correspond to a cholesteric.

3. Device according to either of Claims 1 and 2, **characterized in that** the means (40) designed to apply an electric field to the liquid crystal are suitable for applying an electric field close to the threshold for breaking the anchoring of the liquid crystal to at least one of the surfaces.

4. Device according to one of Claims 1 to 3, **characterized in that** the control means (40) comprise at least one alignment layer, the surface of which is periodically or randomly corrugated.

5. Device according to one of Claims 1 to 4, **characterized in that** the control means (40) comprise means capable of defining a dispersion in the anchoring force on at least one of the surfaces.

6. Device according to Claim 5, **characterized in that** the control means (40) comprise non-uniform alignment layers.

7. Device according to either of Claims 5 and 6, **characterized in that** the control means (40) are suitable for applying a uniform electric drive field.

8. Device according to one of Claims 1 to 4, **characterized in that** the control means comprise means (40) capable of applying slightly non-uniform electric fields to a pixel.

9. Device according to Claim 8, **characterized in that** the control means (40) comprise electrodes (22, 32) the resistance or the surface finish of which is not uniform.

10. Device according to one of Claims 1 to 4, **characterized in that** the control means comprise means (40) capable of causing, during a drive pulse, transient texture instabilities which are of hydrodynamic or flexoelectric origin, or are due to the intrinsic polarity of the surface.

11. Device according to one of Claims 1 to 4, **characterized in that** the control means comprise means (40) capable of causing, during a drive pulse, transient shear flows of the liquid crystal.

12. Device according to one of Claims 1 to 11, **characterized in that** the stabilizing means (40) comprise means capable of applying electrical pulses to the liquid crystal.

13. Device according to Claim 12, **characterized in that** the stabilizing means (40) comprise means capable of applying electrical pulses to the liquid crystal with an amplitude of a few volts.

14. Device according to either of Claims 12 and 13, **characterized in that** the stabilizing means (40) comprise means capable of applying electrical pulses to the liquid crystal with an amplitude of between 2 V and 10 V, preferably around 5 V.

15. Device according to one of Claims 12 to 14, **characterized in that** the stabilizing means (40) comprise means capable of applying electrical pulses to the liquid crystal, independently of the switching signals which ensure that the anchoring is broken, after relaxation of the broken anchoring.

16. Device according to one of Claims 12 to 14, **characterized in that** the stabilizing means (40) comprise means capable of applying electrical pulses to the liquid crystal which are incorporated into the last part of the drive signals for ensuring that the anchoring is broken.

17. Device according to one of Claims 1 to 16, **characterized in that** the means (40) designed to apply an electric field to the liquid crystal are suitable for applying a variable electric field, close to the threshold for breaking the liquid-crystal anchoring on at least one of the surfaces, the amplitude of the field being used to control the grey scale obtained.

18. Method employing a nematic bistable display device comprising:
• a nematic liquid crystal layer (10) placed between two substrates (20, 30) provided with electrodes (22, 32) and with alignment means (24, 34) which ensure monostable surface anchoring states of the liquid crystal, the symmetry and the force of at least one of the anchoring states allowing the anchoring to be broken in an electric field perpendicular to the substrates; and
• means (40) for applying an electric field to the liquid crystal, between the two substrates, and for breaking the anchoring on at least one of the surfaces, with a transient passage of the surface director parallel to the field and relaxation after the field has been broken towards one or other of the two bistable or metastable textures, which differ from each other by a 180° twist and are both compatible with monostable anchoring states;
**characterized in that** the method comprises the steps consisting in:
• producing, after the anchoring has been broken, hybrid textures in which the said bistable textures coexist in a controlled proportion within the same pixel, the said textures being separated by 180° disclination lines in the volume or by 180° reorientation walls on one of the surfaces; and
• stabilizing the hybrid textures long term by transformation of the volume lines into surface walls and immobilization of these walls on the surface, by applying electrical pulses to the liquid crystal, the amplitude of which is between the Fredericks threshold and the anchoring breaking threshold.

## Patentansprüche

1. Bistabile nematische Anzeigevorrichtung, umfassend:
eine Schicht aus nematischem Flüssigkristall (10), die zwischen zwei mit Elektroden (22, 32) und Ausrichtungsmitteln (24, 34) ausgestatteten Substraten (20, 30) angeordnet ist, welche monostabile Verankerungen des Flüssigkristalls (10) auf den Oberflächen sicherstellen, wobei die Symmetrie und die Kraft mindestens einer der Verankerungen das Brechen der Verankerung unter einem elektrischen Feld gestatten, das senkrecht zu den Substraten (20, 30) ist,
Mittel (40), um ein elektrisches Feld an dem Flüssigkristall zwischen den zwei Substraten (20, 30) anzulegen und die Verankerung auf mindestens einer der Oberflächen zu brechen, mit einem vorübergehenden Durchtritt des Direktors durch die parallel zum Feld verlaufende Oberfläche und Relaxation nach Aufheben des Felds in Richtung der einen oder der anderen der beiden bistabilen oder metastabilen Strukturen, die sich durch eine Drehung von 180 ° unterscheiden und alle beide mit den monostabilen Verankerungen kompatibel sind,
**dadurch gekennzeichnet, dass** sie darüber hinaus umfasst:
Steuerungsmittel (40) zur Herstellung von gemischten Strukturen nach dem Brechen der Verankerung, wobei die bistabilen Strukturen mit gesteuertem Verhältnis in demselben Pixel koexistieren, getrennt durch Linien der Nicht-Neigung um 180 ° im Volumen oder durch Wände der Umorientierung um 180 ° auf einer der Oberflächen und
Mittel (40) zur Langzeitstabilisierung von gemischten Strukturen durch Umwandlung von Volumenlinien in Oberflächenwänden und die Immobilisierung dieser Wände auf der Oberfläche, wobei die Mittel (40) zur Stabilisierung Mittel umfassen, die geeignet sind, elektrische Impulse an dem Flüssigkristall anzulegen, deren Amplitude zwischen der Frederiks-Schwelle und der Schwelle des Brechens der Verankerung eingeschlossen liegt.

2. Vorrichtung nach Anspruch 1, **dadurch gekennzeichnet, dass** der Flüssigkristall (10) so dotiert ist, dass er chiral ist und einem cholesterischen entspricht.

3. Vorrichtung nach einem der Ansprüche 1 oder 2, **dadurch gekennzeichnet, dass** die Mittel (40), die zum Anlegen eines elektrischen Felds an dem Flüssigkristall ausgelegt sind, so angepasst sind, dass ein elektrisches Feld in der Nähe der Schwelle des Brechens der Verankerungen des Flüssigkristalls auf mindestens einer der Oberflächen angelegt wird.

4. Vorrichtung nach einem der Ansprüche 1 bis 3, **dadurch gekennzeichnet, dass** die Steuerungsmittel (40) mindestens eine Ausrichtungsschicht umfassen, deren Oberfläche periodisch oder zufällig gewellt ist.

5. Vorrichtung nach einem der Ansprüche 1 bis 4, **dadurch gekennzeichnet, dass** die Steuerungsmittel (40) Mittel umfassen, die so angepasst sind, dass sie eine Dispersion der Verankerungskraft auf mindestens einer der Oberfläche festlegen.

6. Vorrichtung nach Anspruch 5, **dadurch gekennzeichnet, dass** die Steuerungsmittel (40) nicht-gleichförmige Ausrichtungsschichten umfassen.

7. Vorrichtung nach einem der Ansprüche 5 oder 6, **dadurch gekennzeichnet, dass** die Steuerungsmittel (40) zum Anlegen eines elektrischen Felds mit gleichförmiger Steuerung geeignet sind.

8. Vorrichtung nach einem der Ansprüche 1 bis 4, **dadurch gekennzeichnet, dass** die Steuerungsmittel Mittel (40) umfassen, die geeignet sind, an einem Pixel elektrische Felder anzulegen, die etwas nicht-gleichförmig sind.

9. Vorrichtung nach Anspruch 8, **dadurch gekennzeichnet, dass** die Steuerungsmittel (40) Elektroden (22, 32) umfassen, deren Widerstand oder Oberflächenzustand nicht gleichförmig ist.

10. Vorrichtung nach einem der Ansprüche 1 bis 4, **dadurch gekennzeichnet, dass** die Steuerungsmittel Mittel (40) umfassen, die dazu geeignet sind, während eines Steuerungsimpulses vorübergehende Strukturinstabilitäten hydrodynamischen, flexoelektrischen oder auf der intrinsischen Polarität der Oberfläche beruhenden Ursprungs hervorzurufen.

11. Vorrichtung nach einem der Ansprüche 1 bis 4, **dadurch gekennzeichnet, dass** die Steuerungsmittel Mittel (40) umfassen, die geeignet sind, während eines Steuerungsimpulses vorübergehende Scherflüsse des Flüssigkristalls hervorzurufen.

12. Vorrichtung nach einem der Ansprüche 1 bis 11, **dadurch gekennzeichnet, dass** die Stabilisierungsmittel (40) Mittel umfassen, die geeignet sind, elektrische Impulse an dem Flüssigkristall anzulegen.

13. Vorrichtung nach Anspruch 12, **dadurch gekennzeichnet, dass** die Stabilisierungsmittel Mittel (40) umfassen, die geeignet sind, elektrische Impulse mit einer Amplitude von einigen Volt an dem Flüssigkristall anzulegen.

14. Vorrichtung nach einem der Ansprüche 12 oder 13, **dadurch gekennzeichnet, dass** die Stabilisierungsmittel (40) Mittel umfassen, die geeignet sind, elektrische Impulse mit einer Amplitude zwischen 2 V und 10 V einschließlich, vorzugsweise in der Größenordnung von 5 V, an dem Flüssigkristall anzulegen.

15. Vorrichtung nach einem der Ansprüche 12 bis 14, **dadurch gekennzeichnet, dass** die Stabilisierungsmittel (40) Mittel umfassen, die geeignet sind, nach der Relaxation der gebrochenen Verankerung elektrische Impulse an dem Flüssigkristall anzulegen, unabhängig von Umschaltungssignalen, die das Brechen der Verankerung sicherstellen.

16. Vorrichtung nach einem der Ansprüche 12 bis 14, **dadurch gekennzeichnet, dass** die Stabilisierungsmittel (40) Mittel umfassen, die geeignet sind, an dem Flüssigkristall integrierte elektrische Impulse im letzten Teil der Steuerungssignale, welche das Brechen der Verankerung sicherstellen, anzubringen.

17. Vorrichtung nach einem der Ansprüche 1 bis 16, **dadurch gekennzeichnet, dass** die Mittel (40), die zum Anlegen eines elektrischen Felds an dem Flüssigkristall ausgelegt sind, zur Anwendung eines variablen elektrischen Felds nahe der Schwelle des Brechens der Flüssigkristallverankerungen auf mindestens einer der Oberflächen geeignet sind, wobei die Amplitude des Felds die Steuerung der erhaltenen Graustufe ermöglicht.

18. Verfahren zum Anzeigen, welches eine bistabile nematische Anzeigevorrichtung einsetzt, welche umfasst:
eine Schicht aus nematischem Flüssigkristall (10), die zwischen zwei mit Elektroden (22, 32) und Ausrichtungsmitteln (24, 34) ausgestatteten Substraten (20, 30) angeordnet ist, welche monostabile Verankerungen des Flüssigkristalls (10) auf den Oberflächen sicherstellen, wobei die Symmetrie und die Kraft mindestens einer der Verankerungen das Brechen der Verankerung unter einem elektrischen Feld gestatten, das senkrecht zu den Substraten ist,
Mittel (40), um ein elektrisches Feld an dem Flüssigkristall zwischen den zwei Substraten anzulegen und die Verankerung auf mindestens einer der Oberflächen zu brechen, mit einem vorübergehenden Durchtritt des Direktors durch die parallel zum Feld verlaufende Oberfläche und Relaxation nach Aufheben des Felds in Richtung der einen oder der anderen der beiden bistabilen oder metastabilen Strukturen, die sich durch eine Drehung von 180 ° unterscheiden und alle beide mit den monostabilen Verankerungen kompatibel sind,
**dadurch gekennzeichnet, dass** das Verfahren die Schritte umfasst, die bestehen aus:
Herstellen nach dem Brechen der Verankerung von gemischten Strukturen, wobei die bistabilen Strukturen in einem gesteuerten Verhältnis in demselben Pixel koexistieren, getrennt durch Linien der Nicht-Neigung um 180 ° oder durch Wände der Umorientierung um 180 ° auf einer der Oberflächen, und
Langzeitstabilisierung der gemischten Strukturen durch Umwandlung der Volumenlinien in Oberflächenwände und Immobilisierung dieser Wände auf der Oberfläche, indem man elektrische Impulse an dem Flüssigkristall anlegt, deren Amplitude zwischen der Frederiks-Schwelle und der Schwelle des Brechens der Verankerung eingeschlossen ist.
